Europäisches Patentamt

European Patent Office

Office européen des brevets

(11) Veröffentlichungsnummer : **0 212 262
B1**

(12) **EUROPÄISCHE PATENTSCHRIFT**

(45) Veröffentlichungstag der Patentschrift :
21.12.88

(51) Int. Cl.⁴ : **B 60 T   7/10,** B 60 N   1/06

(21) Anmeldenummer : 86109798.8

(22) Anmeldetag : 17.07.86

(54) Anordnung eines Handbremshebels in einem Kraftfahrzeug.

(30) Priorität : 08.08.85 DE 3528568

(43) Veröffentlichungstag der Anmeldung :
04.03.87 Patentblatt 87/10

(45) Bekanntmachung des Hinweises auf die Patenterteilung : 21.12.88 Patentblatt 88/51

(84) Benannte Vertragsstaaten :
DE FR GB IT SE

(56) Entgegenhaltungen :
DE–A– 1 813 417
DE–B– 1 108 085
DE–B– 1 220 266
DE–C– 2 708 993

(73) Patentinhaber : BAYERISCHE MOTOREN WERKE
Aktiengesellschaft
Postfach 40 02 40 Petuelring 130 - AJ-36
D-8000 München 40 (DE)

(72) Erfinder : Woyack, Werner
Kolonienstrasse 9
D-8038 Gröbenzell (DE)
Erfinder : Merz, Ewald
Deganoweg 10
D-8184 Gmund (DE)

(74) Vertreter : Dexheimer, Rolf
Bayerische Motoren Werke Aktiengesellschaft Postfach 40 02 40 Petuelring 130 - AJ-31
D-8000 München 40 (DE)

## Beschreibung

Die Erfindung bezieht sich auf die Anordnung eines Handbremshebels in einem Kraftfahrzeug, der neben einem Fahrzeugsitz um eine Querachse schwenkbar gelagert und am vorderen Ende mit einem Griff versehen ist.

Derartige Handbremshebel sind vielfach bekannt. Es sind auch schon Handbremshebel bekannt (DE-C 27 08 993, Fahrzeuge des Typs « Alfa 90 »), die einen querverlaufenden Griff haben. In dem zuletzt erwähnten Fall ist auch schon eine im Bereich des Handbremshebels gelegene Ablageschale mit einer gepolsterten Abdeckung versehen.

Die bekannten Anordnungen und Ausbildungen eines Handbremshebels und einer Armstütze haben den Nachteil, daß sie sich gegenseitig in dem für ihre Funktion erforderlichen Bauraum ungünstig beeinflussen. Ist die Armstütze genügend groß, so verbleibt für den Handbremshebel nur mehr wenig Raum, weshalb seine Zugänglichkeit beeinträchtigt ist. Wird dagegen auf gute Ergreifbarkeit des Handbremshebels größerer Wert gelegt, so hat die gepolsterte Abdeckung der Ablageschale nur eine unzureichende Größe, um als gute Armstütze fungieren zu können.

Der Erfindung liegt die Aufgabe zugrunde, eine Anordnung und Ausbildung eines Handbremshebels für ein Kraftfahrzeug zu schaffen, die eine gute Ergreifbarkeit des Handbremshebels gewährleistet, eine gute Abstützmöglichkeit für den Arm des Fahrers bietet und stilistisch ansprechend ist.

Diese Aufgabe wird mit einem Handbremshebel der eingangs erwähnten Gattung dadurch gelöst, daß der Handbremshebel in seinem hinter dem Griff liegenden Bereich als Armstütze ausgebildet ist. Auf diese Weise braucht bei der Dimensionierung der Armstütze nicht auf die Platzierung und Ausbildung des (im Stand der Technik separaten) Handbremshebels so viel Rücksicht genommen zu werden. Die Armstütze, die zugleich den Handbremshebel bildet, wird in der Regel dann hochgeschwenkt und ist dann als Armstütze nicht mehr vonnöten, wenn der Fahrer das Fahrzeug abstellt und verläßt. Wird das Fahrzeug wieder in Betrieb genommen und die Handbremse gelöst, so befindet sich die in den Handbremshebel integrierte Armstütze wieder in der Position, in der sie als Armstütze ihre Funktion voll erfüllen kann, nämlich in der im wesentlichen waagrechten Ruhelage.

Mehrere Ausführungsbeispiele der Erfindung und zweckmäßige Weiterbildungen sind im folgenden anhand der Zeichnung näher erläutert. Es zeigen :

Fig. 1 die perspektivische Ansicht eines ersten Ausführungsbeispiels der Erfindung ;

Fig. 2 eine der Fig. 1 entsprechende Ansicht, jedoch mit hochgeklappter Beifahrer-Armstütze und

Fig. 3 eine der Fig. 1 entsprechende Ansicht eines etwas abgewandelten Ausführungsbeispiels.

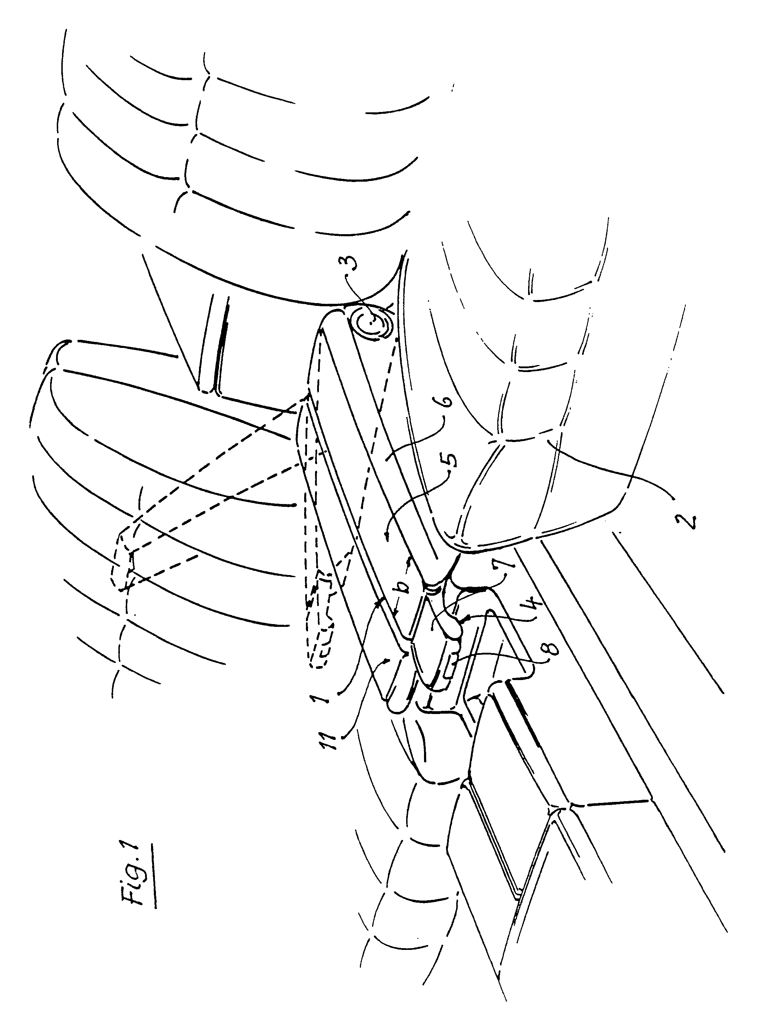

Der in Fig. 1 der Zeichnung dargestellte Handbremshebel 1 für ein Kraftfahrzeug ist neben dem für den Fahrer bestimmten Fahrzeugsitz 2 angeordnet und um eine Querachse 3 schwenkbar gelagert. Er ist ferner am vorderen Ende mit einem Griff 4 versehen.

Der Handbremshebel 1 ist in seinem hinter dem Griff liegenden Bereich als Armstütze 5 ausgebildet. Wie man ferner erkennt hat der Handbremshebel 1 einen querverlaufenden Griff 4 und die Armstützenauflage 6 weist etwa die Breite b des Griffes 4 auf und schließt sich unmittelbar an dem Griff 4 an. Der Griff 4 ist als flächige Handhabe 7 ausgebildet, die in der Mitte eine Lösetaste 8 zum entriegeln des Handbremshebels 1 aufweist.

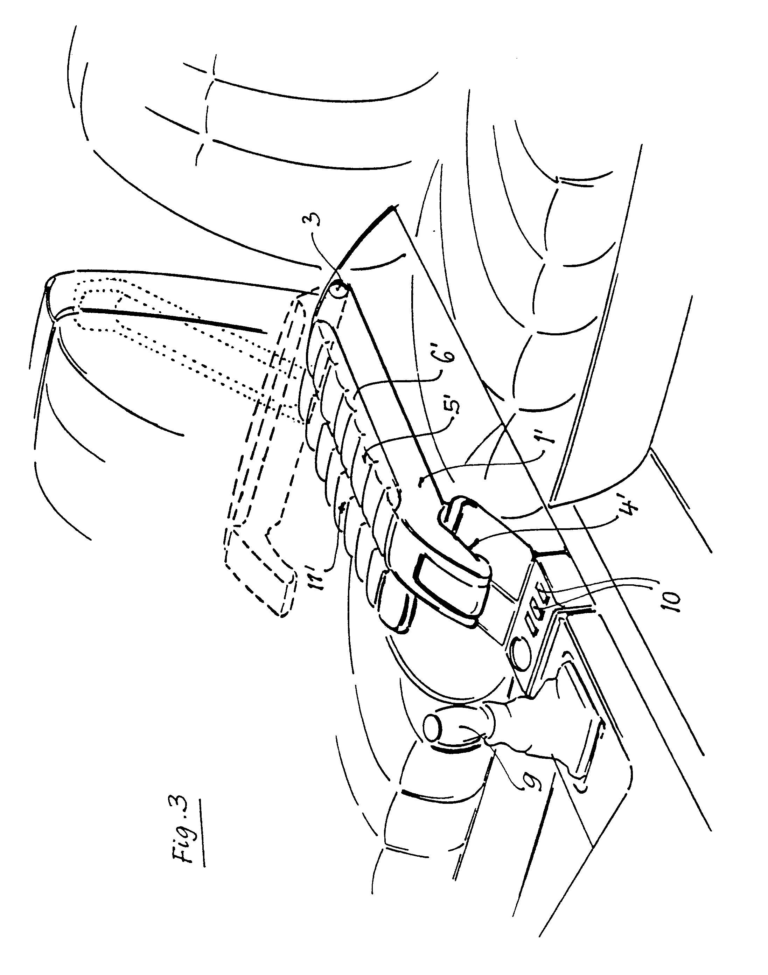

Bei dem in Fig. 3 dargestellten Ausführungsbeispiel eines Handbremshebels 1' ist der Griff 4' nach vorne unten gerichtet. Auf diese Weise läßt sich der Schalthebel 9 besser ergreifen und auch gegebenenfalls in diesem Bereich vorhandene Drucktasten 10 oder ähnliches besser erreichen.

Bei den in der Zeichnung dargestellten Ausführungsbeispielen hat der gesamte Handbremshebel 1 bzw. 1' etwa die Breite der Armstützenauflage 6 bzw. 6'. Er ist daher im wesentlichen als kastenförmiges oder U-förmiges Bauteil ausgebildet.

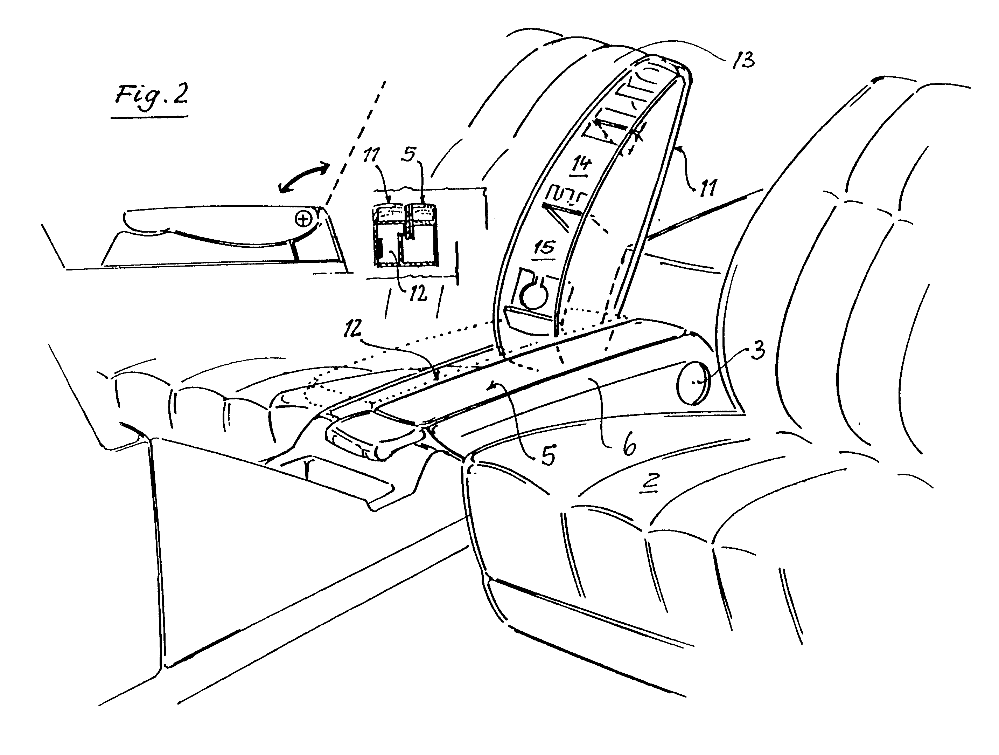

Bei der bevorzugten Anordnung und Ausbildung der Handbremshebel 1 bzw. 1' ist auf der Beifahrerseite unmittelbar neben dem Handbremshebel 1 bzw. 1' eine zweite Armstütze 11 bzw. 11' für den Beifahrer angeordnet die mit der Armstütze 5 bzw. 5' des Handbremshebels 1 bzw. 1' — zumindest in Seitenansicht — weitgehend konturengleich ist. Die zweite Armstütze 11 bzw. 11' ist als Abdeckung einer Ablageschale 12 ausgebildet, die sich neben dem Handbremshebel 1 befindet. Diese Abdeckung, also die zweite Armstütze 11, ist um eine zur Schwenkachse 3 des Handbremshebels 1 koaxiale Achse nach oben schwenkbar, wie man in Fig. 2 erkennt. Sie ist in der nach oben geschwenkten Stellung in Seitenansicht etwa konturengleich mit der angrenzenden Sitzlehne 13 des Beifahrersitzes.

Die die Abdeckung bildende zweite Armstütze 11 ist an ihrer Unterseite in Fächer 14, 15 unterteilt, die gegebenenfalls auch zur stabileren Halterung von Gläsern oder ähnlichem ausgebildet sein können.

Die zweite Armstütze 11, die die Abdeckung der Ablegeschale 12 bildet, kann auch verschließbar sein, etwa mit einem Schlüssel. Sie kann auch in der Weise verriegelt sein, daß sie bei abgezogenem Zündschlüssel elektromagnetisch oder ähnlich verriegelt ist. Die Abdeckung gewährleistet schließlich noch, daß beispielsweise bei einem offenen, als Cabrio ausgebildeten Personenkaftwagen die in der Ablegeschale 12 aufbewahrten Gegenstände nicht nur gegen Diebstahl gesichert, sondern auch vor Regen oder Staub geschützt sind.

**Patentansprüche**

1. Anordnung eines Handbremshebels in einem Kraftfahrzeug, der neben einem Fahrzeugsitz um eine Querachse schwenkbar gelagert und am vorderen Ende mit einem Griff versehen ist, dadurch gekennzeichnet, daß der Handbremshebel (1, 1') in seinem hinter dem Griff liegenden Bereich als Armstütze (5, 5') ausgebildet ist.

2. Anordnung nach Anspruch 1, mit einem quer verlaufenden Griff des Handbremshebels, dadurch gekennzeichnet, daß die Armstützenauflage (6, 6') etwa die Breite (b) des Griffes (4, 4') hat und sich unmittelbar an den Griff (4, 4') anschließt.

3. Anordnung nach Anspruch 2, dadurch gekennzeichnet, daß der Griff (4, 4' als flächige Handhabe (7) ausgebildet ist, die in der Mitte eine Lösetaste (8, 8') aufweist.

4. Anordnung nach Anspruch 3, dadurch gekennzeichnet, daß der Griff (4') nach vorne unten gerichtet ist.

5. Anordnung nach Anspruch 2, dadurch gekennzeichnet, daß der gesamte Handbremshebel (1, 1') etwa die Breite der Armstützenauflage (6, 6') hat.

6. Anordnung nach Anspruch 1, dadurch gekennzeichnet, daß auf der Beifahrerseite unmittelbar neben dem Handbremshebel (1, 1') eine zweite Armstütze (11, 11') für den Beifahrer angeordnet ist, die mit der Armstütze (5, 5') des Handbremshebels (1, 1') weitgehend konturengleich ist.

7. Anordnung nach Anspruch 6, dadurch gekennzeichnet, daß die zweite Armstütze (11, 11') in bekannter Weise als Abdeckung einer Ablageschale (12) ausgebildet ist.

8. Anordnung nach Anspruch 7, dadurch gekennzeichnet, daß die Abdeckung um eine zur Schwenkachse (3) des Handbremshebels (1) koaxiale Achse nach oben schwenkbar ist.

9. Anordnung nach Anspruch 8, dadurch gekennzeichnet, daß die nach oben geschwenkte Abdeckung in Seitenansicht etwa konturengleich mit der angrenzenden Sitzlehne (13) ausgebildet ist.

10. Anordnung nach Anspruch 8, dadurch gekennzeichnet, daß die Abdeckung an ihrer Unterseite in Fächer (14, 15) unterteilt ist.

11. Anordnung nach Anspruch 7, dadurch gekennzeichnet, daß die Abdeckung verschließbar ist.

12. Anordnung nach Anspruch 11, dadurch gekennzeichnet, daß die Abdeckung bei abgezogenem Zündschlüssel elektromagnetisch verriegelt ist.

**Claims**

1. An arrangement of a handbrake lever in a motor vehicle, which lever is mounted for swivelling movement about a transverse axis adjacent to a vehicle seat and is provided at the front end with a grip, characterised in that the handbrake lever (1, 1') is constructed as an arm support (5, 5') in its region lying behind the grip.

2. An arrangement according to Claim 1 having a transversely-extending handle of the handbrake lever, characterised in that the arm support seat (6, 6') has approximately the width (b) of the grip (4, 4') and immediately adjoins the grip (4, 4').

3. An arrangement according to Claim 2, characterised in that the grip (4, 4') is constructed as a surfaced handle (7) which has a release button (8, 8') in the centre.

4. An arrangement according to Claim 3, characterised in that the grip (4') is directed downwardly towards the front.

5. An arrangement according to Claim 2, characterised in that the entire handbrake lever (1, 1') has approximately the width of the arm support seat (6, 6').

6. An arrangement according to Claim 1, characterised in that, on the passenger side immediately adjacent to the handbrake lever (1, 1'), a second arm support (11, 11') is arranged for the passenger, which support is generally of identical contour to the arm support (5 5') of the handbrake lever (1, 1,).

7. An arrangement according to Claim 6, characterised in that the second arm support (11, 11') is constructed in a known manner as a cover of a storage tray (12).

8. An arrangement according to Claim 7, characterised in that the cover is upwardly pivotable about an axis coaxial to the swivelling axis (3) of the handbrake lever (1).

9. An arrangement according to Claim 8, characterised in that the upwardly-pivotable cover is constructed in side view approximately of idential contour to the adjoining seat back rest (13).

10. An arrangement according to Claim 8, characterised in that the cover is divided on its underside into compartments (14, 15).

11. An arrangement according to Claim 7, characterised in that the cover is lockable.

12. An arrangement according to Claim 11, characterised in that, when the ignition key is removed, the cover is locked electromagnetically.

**Revendications**

1. Disposition d'un levier de frein à main dans un véhicule à moteur, qui est guidé de manière pivotante, à côté d'un siège de conducteur, autour d'un axe transversal et est pourvu d'une poignée, à l'extrémité avant, caractérisée en ce que le levier de frein à main (1, 1') est réalisé sous forme d'accoudoir (5, 5'), dans sa zone derrière la poignée.

2. Disposition selon la revendication 1, avec une poignée du levier de frein à main se développant transversalement, caractérisée en ce que le support d'accoudoir (6, 6') possède approximativement la largeur (b) de la poignée et se raccorde immédiatement à la poignée (4, 4').

3. Disposition selon la revendication 2, caractérisée en ce que la poignée (4, 4') est réalisée sous forme de prise (7) plate, qui possède au centre un bouton de déclenchement (8, 8').

4. Disposition selon la revendication 3, caractérisée en ce que la poignée (4') est orientée vers l'avant et vers le bas.

5. Disposition selon la revendication 2, caractérisée en ce que le levier complet de frein à main (1, 1') possède approximativement la largeur du support de l'accoudoir (6, 6').

6. Disposition selon la revendication 1, caractérisée en ce qu'un deuxième accoudoir (11, 11') est disposé du côté du passager, directement à côté du levier de frein à main (1, 1'), et est de contour largement identique à l'accoudoir (5, 5') du levier de frein à main (1, 1').

7. Disposition selon la revendication 6, caractérisée en ce que, de manière connue, le deuxième accoudoir (11, 11') est réalisé sous forme de revêtement d'une boîte de rangement (12).

8. Disposition selon la revendication 7, caractérisée en ce que le revêtement est basculant vers le haut, autour d'un axe coaxial à l'axe de pivotement (3) du levier de frein à main (1).

9. Disposition selon la revendication 8, caractérisée en ce que le revêtement basculé vers le haut est réalisé avec un contour approximativement identique, en vue de côté, à celui du dossier de siège (13) contigu.

10. Disposition selon la revendication 8, caractérisée en ce que, sur son côté inférieur, le revêtement est subdivisé en soufflets (14, 15).

11. Disposition selon la revendication 7, caractérisée en ce que le revêtement est obturable.

12. Disposition selon la revendication 11, caractérisée en ce que le revêtement est verrouillé électromagnétiquement, lorsque la clé de contact est enlevée.

Fig.1

0 212 262

Fig.2

Fig.3